# EUROPEAN PATENT SPECIFICATION

(11) **EP 0 668 880 B1**
(45) Date of publication and mention of the grant of the patent: **21.07.1999**
(21) Application number: 93923784.8
(22) Date of filing: 05.10.1993
(51) Int. Cl.: C08F 10/00, C08F 4/645

(54) **POLYMERISATION PROCESS USING A CATALYST SYSTEM OF ENHANCED PRODUCTIVITY**
POLYMERISATIONSVERFAHREN MITTELS EINES KATALYSATORSYSTEMS MIT GESTEIGERTEM LEISTUNGSVERMÖGEN
PROCEDE DE POLYMERISATION UTILISANT UN SYSTEME CATALYSEUR A PRODUCTIVITE AMELIOREE

(30) Priority: 05.10.1992 US 957305
(43) Date of publication of application: 30.08.1995
(73) Proprietor: EXXON CHEMICAL PATENTS INC., Baytown, TX 77520-2149 (US)
(72) Inventor: HLATKY, Gregory, George, Houston, TX 77062 (US); CANICH, Jo, Ann, Marie, Houston, TX 77058 (US); TURNER, Howard, William, Houston, TX 77059 (US)
(74) Representative: Dew, Melvyn John
(86) International application number: US9309529
(87) International publication number: WO9407927

(56) References cited:
- EP-A- 0 426 638
- EP-A- 0 554 574
- WO-A-92/05203
- WO-A-93/14132
- WO-A-93/19103
- WO-A-94/03506
- WO-A-94/07928

## Description

### Background of the Invention

### 1. Field of the Invention

This invention relates generally to the use of Group 13 element compounds to improve the productivity of ionic transition metal catalyst systems. More specifically the invention relates to the use of a Group 13 element organometallic compound as additive to an ionic mono(cyclopentadienyl)/heteroatom transition metal olefin polymerization catalyst system. These catalyst systems have enhanced productivity over similar catalysts, in the absence of Group 13 compounds, for the polymerization of unsaturated monomer, e.g., olefinically unsaturated monomers such as ethylene, other ethylenically unsaturated olefins or olefinic species, diolefins, cyclic olefins, ethylenically unsaturated non-cyclic non-conjugated polyenes, cyclic non-conjugated polyenes, and acetylenically unsaturated monomers or combinations thereof, to form polymers such as polyolefins having narrow molecular weight distributions.

### 2. Background

Ziegler-Natta type catalysts for the polymerization of olefins are well known. The traditional Ziegler-Natta type systems comprise a metal halide activated to a catalyst species by reaction with a metal alkyl cocatalyst, particularly an aluminum alkyl cocatalyst. The activation of these traditional heterogeneous Ziegler-Natta catalysts generates a variety of different active sites. As a consequence of this non-uniformity of the active sites, the catalysts produce polymer products of broad molecular weight distribution (MWD). In many application, this broad MWD is undesirable. Furthermore, the polymer products exhibit relatively poor composition distribution (CD), comonomer incorporation and sequence distribution.

Also known are catalyst systems comprising a bis(cyclopentadienyl) ("Cp") transition metal and a compound cocatalyst. Such bis Cp transition metal compounds, in the presence of activators catalyze the polymerization of olefin monomers to polyolefins. Bis (Cp) transition metal compounds of the Group 4 metals, particularly of titanium and zirconium, have been used. When such transition metal components are cocatalyzed with an aluminum alkyl - the cocatalyst used with traditional Ziegler-Natta catalysts - the catalytic activity is generally too a low for commercial applications.

US-A-5055438 (Exxon), EP-A-420436 (Exxon), WO 91/04257 (Exxon) and EP-A-416815 (Dow) describe a class of catalysts having a single cyclopentadienyl ring ligand and a heteroatom bonded to the metal atom, and their use in conjunction with alumoxanes. Similar catalyst systems are taught in US-A-5064802 (Dow), incorporated herein by reference, EP-A-418044 (Dow) and WO 92/00333 (Exxon), but having a non-coordinating anion as activating cocatalyst. Here the catalyst system is prepared as a reaction product of a mono(cyclopentadienyl) heteroatom metal compound and an ionic activator compound. Such catalyst systems referred to as an "ionic mono (Cp)/heteroatom transition metal catalyst" or an "ionic mono(Cp) catalyst" permits the production of polyolefin products of narrow MWD at high rates of catalytic activity with good incorporation of comonomers and control of the chain end chemistry of the polymer products.

WO-A-91/14713 (Exxon) describes bis-(Cp) transition metal components activated by non-coordinating catalysts wherein Group III-A element compounds are used to neutralize impurities that might otherwise inactivate the catalyst systems during polymerization processes. Preferred Group III-A element compounds are the lower-alkyl substituted Group III-A element compounds of trimethyl aluminum and triethylaluminum. WO-A-93/14132 (Dow), published after the priority date of this application, describes mono-(Cp) transition metal components activated by non-coordinating catalysts wherein alumoxane compounds are used to resist impurities and presents a comparative example E using triethyl aluminum instead of a alumoxane compound which is stated to illustrate the principle that trialkyl aluminums are not effective for poison removal when used with the mono-(Cp)/non-coordinating ion catalyst systems.

Since mono-(Cp) transition metal compounds have different chemical structure than the bis-(Cp) transition metal compounds, e.g., a heteroatom ligand of the mono-(Cp) compound replaces one of the bis-(Cp) ligands of the bis-(Cp) compound, they can be more unstable, more subject to the affect of catalyst poisons and more reactive with acidic Lewis base metal compounds used to neutralize poisons. Reaction with either of poison or neutralizing compound can inhibit the catalytic activity of the mono-(Cp) transition metal catalysts systems. Further it is known that alumoxane used in excess of that necessary to activate known bis-(Cp) transition metal catalysts systems can neutralize poisons, thus in systems using non-coordinating ionic compounds as activators - not alumoxane compounds - other compositions to neutralize poisons are needed. Therefore there is a desideratum for an additive effective for use during polymerization to neutralize impurities contained in the polymerization medium without affecting the ability of these ionic mono (Cp) catalysts to produce polyolefin products.

### Summary of the Invention

This invention provides a polymerization process for polymerizing unsatured monomers to form a polymer but excluding styrenic polymer and stereoregular polyolefin which uses a non-supported catalyst system comprising: (a) a cation comprising: (1) a Group 4 transition metal, (2) a mono cyclopentadienyl ligand or polycyclic derivative thereof bonded to the Group 4 transition metal atom, (3) one Group 15 or 16 heteroatom ligand bonded to the metal throughout the heteroatom, and (4) at least one other ligand; (b) a non-coordinating anion of a Bronsted acid salt; (c) a Group 13 element organo compound excluding alumoxane: wherein, when said Group 4 transition metal is Ti and said mono cyclopentadienyl ligand or polycyclic derivative is bridged to said Group 15 or 16 heteroatom with a dimethyl silyl radical and said Group 15 or 16 heteroatom further contains a tertiary-butyl substituent, said Group 13 organo compound excludes either of trimethyl or triethyl aluminum. The presence of the specified organo compound neutralizes those impurities capable of deactivating the active catalytic sites of the ionic mono (Cp) catalyst, so providing a catalyst system which generally has greatly improved productivity without significantly affecting molecular weight or extent of comonomer incorporation.

The ionic mono (Cp) catalyst component comprises a complex having (i) a cationic portion derived from a Group 4 transition metal compound having a single delocalized unsubstituted or substituted pi-bonded moiety bound in an η^{s} bonding mode to the metal, and a heteroatom-containing moiety bonded to the metal through the heteroatom; and (ii) an anionic portion which is a non-coordinating compatible anion of a Bronsted acid salt. Such catalyst components are described in WO 92/00333. Thus the catalyst component may comprise derivatives of a Group 4 transition metal compound containing at least one ligand which will combine with an activator component or at least a portion thereof, such as a cation portion. The activator component of the catalyst, of which there may be more than one, is an ion-exchange compound comprising a cation which will irreversibly react with at least one ligand contained in said transition metal compound and an anion which is a single coordination complex comprising a plurality of lipophilic radicals or a plurality of boron atoms, covalently coordinated to and shielding a central formally charge-bearing metal or metalloid atom. The anion is bulky, labile and stable to any reaction involving the cation of the activator component. The charge-bearing metal or metalloid may be any metal or metalloid capable of forming a coordination complex which is not hydrolyzed by aqueous solutions. Upon combination of the mono (Cp) component and activator component, the cation of the activator component react with one of the ligand of the mono (Cp) component. That anion is compatible with, and noncoordinating toward, the metal cation formed from the mono (Cp) component. It is important that the anion of the activator compound be capable of stabilizing the transition metal cation complex without interfering with the ability of the transition metal cation or its decomposition product to function as a catalyst, and further that it be sufficiently labile to permit displacement by an olefin, diolefin, acetylenically unsaturated monomer, or other polymerizable species, during polymerization. The selection of suitable mono (Cp) transition metal component(s)-activator pairs to produce ionic catalyst systems is dealt with in EP-A-0277003, EP-A-0277004 and WO 92/00333.

The additive component of the catalyst system is a Group 13 element compound such as a hydrolyzable Lewis acid which is able to neutralize impurities. These impurities include moisture or oxygen which reduce the activity of the ionic metallocene catalyst component.

### Detailed Description of the Preferred Embodiments

The polymerization process of this invention may be practiced with that class of ionic catalysts as described in EP-A-0277003, EP-A-0277004, WO 92/00333 and US Patent 5,153,157. The ionic catalysts are used in conjunction with a Group 13 organometallic additive to achieve enhanced productivity.

The ionic catalyst is prepared by combining two components. The first of these contains at least one cyclopentadienyl derivative of a Group 4 transition metal compound containing at least one ligand which will combine with the second component or at least a portion thereof such as a cation portion thereof. The second component is an ion-exchange compound comprising a cation which will irreversibly react with at least one ligand contained in said Group 4 transition metal compound and a noncoordinating anion which is bulky, labile, and stable. Upon combination of the first and second components, the cation of the second component reacts with one of the ligands of the first component, thereby generating an ion pair consisting of a transition metal cation and an anion; the cation is such that the metal center is in its highest formal oxidation stage (d⁰) and a total formal charge of at least +1 on the transition metal center. For a Group 4 metal, it is desirable to have a formal coordination number of 3 and a valence of +4. The aforementioned anion is compatible with and non-coordinating towards the metal cation formed from the first component. The anion of the second compound must be capable of stabilizing the metal cation complex without interfering with the metal cation's or its decomposition product's ability to function as a catalyst and must be sufficiently labile to permit displacement by ethylene other ethylenically unsaturated olefins or olefinic species, diolefins cyclic olefins, ethylenically unsaturated non-cyclic non-conjugated polyenes, cyclic non-conjugated polyenes, or an acetylenically unsaturated monomer during polymerization.

While comonomer insertion is high with these catalysts, it is remarkably easy, when they are employed to produce particularly ethylene-propylene copolymers, having greater weight average molecular weights at comparable or narrower molecular weight distributions than polyolefin products obtainable with a similar transition metal system which is activated by an aluminum trialkyl or alumoxane cocatalyst.

This invention provides for the use of certain Group 13 element compounds in catalyst systems comprising an ionic transition metal catalyst. Such a system may be employed, with appropriate selection of catalyst species and additive species, to yield an enhanced productivity, without significant adverse effects on the advantageous properties of the polymer product producible with such ionic catalyst. When employing the catalyst system as described a reduced concentration of ionic catalyst to produce polyolefins, may be needed as compared to use of a like catalyst without the additive. This appears to occur through a reduction of the neutralization of the active catalyst by adventitious impurities or alternatively expressed, though, the apparent "scavenging" activity ofthe Group 13 additive

The catalyst system used in the invention comprises:
(a) a reaction product of
   (i) at least one Group 4 transition metal compound and bonded to the metal atom:
      (1) a mono cyclopentadienyl ligand or polycyclic derivative thereof,
      (2) one Group 15 or 16 heteroatom ligand, and
      (3) at least one other ligand,
   (ii) an activator comprising
      (1) a cation which will irreversibly react with at least one ligand of the metal compound, and
      (2) a labile, bulky, non-coordinating anion which is a single coordination complex having a plurality of lipophilic radicals covalently coordinated to, and shielding, a central charge-bearing metal or metalloid atom, or a plurality of boron atoms; and
(b) an organometallic additive compound.

The bulk of the anion is such that upon reaction of the cation with a ligand of the metal compound whereby a Group 4 transition metal cation is formed, the anion is sterically hindered from covalently coordinating to the transition metal cation by an unsaturated hydrocarbon having a Lewis base strength at least equal to ethylene. The activator component is a non-coordinating anion of a Bronsted acid salt.

### A. Metallocene Component of the Ionic Metallocene Catalyst

The Group 4 transition metal compounds, useful as the first component of the catalyst system employed in the process of this invention are mono(cyclopentadienyl) derivatives of titanium, zirconium or hafnium. In general, such useful titanium, zirconium and hafnium compounds may be represented by the following general formulae: 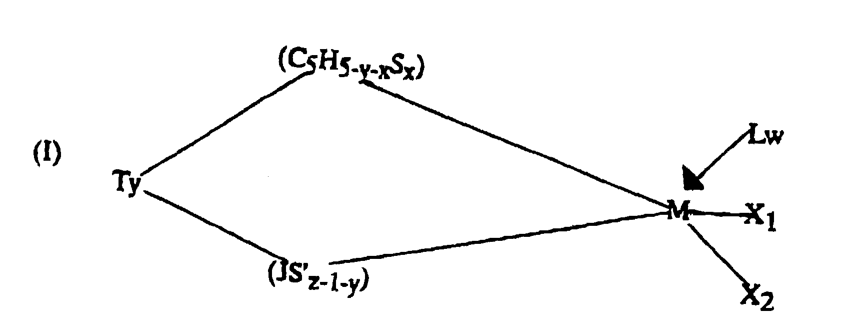 or, 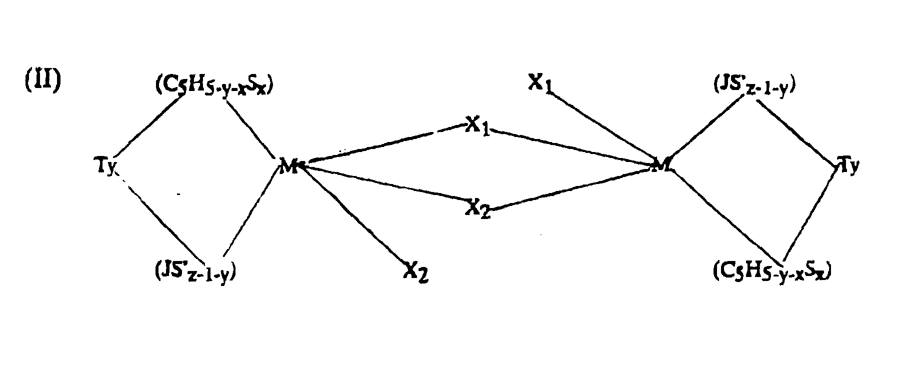 wherein:
M is a Group 4 metal;
(C₅H_{5-y-x}Sₓ) is a cyclopentadienyl ring substituted with from zero to five S radicals;
x is from 1 to 5 denoting the degree of substitution;
each S substituent is, independently, a radical group which is a hydrocarbyl, substituted hydrocarbyl, halocarbyl, substituted halocarbyl, hydrocarbyl-substituted organometalloid, halocarbyl-substituted organometalloid radical, disubstituted boron, disubstituted pnictogen, substituted chalcogen, or halogen or combinations thereof, any two adjacent S groups are joined forming a C₄ to C₂₀ ring to give a saturated or unsaturated polycyclic cyclopentadienyl ligand;
(JS'_{z-1-y}) is a heteroatom ligand in which J is an element from Group 15 of the Periodic Table of Elements (as described in Chemical and Engineering News, 63(5), 27, 1985) with a coordination number of 3 or an element from Group 16 with a coordination number of two; S' is a radical group which is a hydrocarbyl, substituted hydrocarbyl, halocarbyl, substituted halocarbyl, hydrocarbyl-substituted organometalloid, or halocarbyl-substituted organometalloid radical; and z is the coordination number of the element J;
X₁ and X₂ are, hydride radicals, hydrocarbyl radicals, substituted hydrocarbyl radicals, halocarbyl radicals, substituted halocarbyl radicals, and hydrocarbyl- and halocarbyl-substituted organometalloid radicals, or are joined and bound to the metal atom to form a metallacycle ring containing from 3 to 20 carbon atoms;
y is 0 or 1; when y is 1, T is a bridging group;
L is a neutral Lewis base;
w is a number from 0 to 3.

Illustrative, but non-limiting examples of X radicals include hydride, methyl, ethyl, phenyl, n-propyl, isopropyl, n-butyl, t-butyl, amyl, isoamyl, hexyl, cyclohexyl, heptyl, m-tolyl, p-tolyl, trifluoromethyl, tetramethylene and pentamethylene (both X₁ and X₂), trimethylsilyl, triphenylsilyl, and tris(trimethylsilyl)methyl.

Illustrative, but non-limiting examples of T include dimethylsilyl, diethylsilyl, di-n-propylsilyl, dicyclohexylsilyl, diphenylsilyl, methylphenylsilyl, di(p-tolyl)silyl, cyclotetraamethylenesilyl, cyclopentamethylenesilyl, dimethylgermyl, diphenyl-germyl, phenylamido, t-butylamido, methylphosphido, phenylphosphido, methylene, dimethylmethylene, diphenyl-methylene, ethylene, 1,2-dimethylethylene, 1,1,2,2-tetramethylethylene, propylene, and tetramethyl-disiloxane.

Illustrative but non-limiting examples of cyclopentadienyl and substituted cyclopentadienyl ligands include cyclopentadienyl, methylcyclo-pentadienyl 1,2-dimethylcyclopentadienyl, 1,3-dimethylcyclopentadienyl, tetramethylcyclopentadienyl, pentamethylcyclopentadienyl (when y=0) n-butylcyclopentadienyl, t-butylcyclopentadienyl, cyclohexylmethyl-cyclopentadienyl, phenylcyclopentadienyl, trifluoromethylcyclopentadienyl, indenyl, tetrahydroindenyl, fluorenyl, methylfluorenyl, octahydrofluorenyl, trimethylsilylcyclopentadienyl, trimethylgermylcyclopentadienyl, dimethylaminocyclopentadienyl, diphenylphosphinocyclopentadienyl, and iodocyclopentadienyl.

Illustrative but non-limiting examples of (JS'_{x-1-y}) groups include methylamido, ethylamido, n-butylamido, t-butylamido, phenylamido, p-tolylamido, pentafluorophenylamido, cyclohexylamido, methylphosphido, cyclohexylphosphido, phenylphosphido, and, when y=0, oxo, sulfido, methoxy, phenoxy, phenylthio, and acetylacetonato (includes L with w=1).

### B. Activator Compound of the Metallocene Catalyst

Compounds useful as an activator component in the preparation of the catalyst component of the catalyst system comprise a cation, which is preferably but not necessarily a Bronsted acid generally capable of donating a proton, and a compatible noncoordinating anion containing a single coordination complex comprising a charge-bearing metal or metalloid core, which anion is relatively large (bulky), capable of stabilizing the active catalyst species (the Group 4 transition metal cation) which is formed when the metallocene and activator compounds are combined and said anion is sufficiently labile to be displaced by olefinic, diolefinic, ethylenically and acetylenically unsaturated substrates or other neutral Lewis bases such as ethers and nitriles. Two classes of compatible non-coordinating anions have been disclosed in U.S. Patent 5,153,157 1) anionic coordination complexes comprising a plurality of radicals covalently coordinated to and shielding a central charge-bearing metal or metalloid core, and, 2) anions comprising a plurality of boron atoms such as polyhedral boranes, carboranes, and metallacarboranes.

In one embodiment, the activator compounds useful in the preparation of the catalysts may be represented by the following general formula:

(III) [(L'-H)⁺]_{d}[(M')^{m+}Q₁Q₂...Qₙ]^{d-}

wherein:
H is a hydrogen atom;
[L'-H] is a Bronsted acid;
M' is a metal or metalloid;
each Q is, independently, a hydride radical, hydrocarbyl radical, substituted-hydrocarbyl radical, halocarbyl radical, substituted-halocarbyl radical, hydrocarbyl-substituted organometalloid radical, halocarbyl-substituted organometalloid radical, disubstituted pnictogen radical, substituted chalcogen radical, and halogen radical, any one, but not more than one of Q₁ to Qₙ a halogen radical;
m is an integer representing the formal valence charge of M'; and
n is the total number of ligands Q.

As indicated above, any metal or metalloid capable of forming an anionic complex which is stable in water may be used or contained in the anion of the second compound. Suitable metals include, but are not limited to, aluminum, gold, platinum and the like. Suitable metalloids include, but are not limited to, boron, phosphorus, silicon and the like. Compounds containing anions which comprise coordination complexes containing a single metal or metalloid atom are, of course, well known and many, particularly such compounds containing a single boron atom in the anion portion, are available commercially. In light of this, salts containing anions comprising a coordination complex containing a single boron atom are preferred.

The preferred activator compounds comprising boron may be represented by the following general formula:

(IV) [L'-H]⁺[BAr₁Ar₂X₃X₄]⁻

wherein:
[L'-H] is as defined previously;
B is boron in a valence state of 3;
Ar₁ and Ar₂ are the same or different unsubstituted or substituted-aromatic hydrocarbon radicals containing from 6 to 20 carbon atoms and may be linked to each other through a stable bridging group; and
X₃ and X₄ are, independently, hydride radicals, hydrocarbyl and substituted-hydrocarbyl radicals, halocarbyl and substituted-halocarbyl radicals, hydrocarbyl- and halocarbyl-substituted organometalloid radicals, disubstituted pnictogen radicals, substituted chalcogen radicals and halide radicals, with the proviso that X₃ and X₄ will not be halide at the same time.

In general, Ar₁ and Ar₂ may be, independently, any unsubstituted or substituted-aromatic hydrocarbon radical. Suitable aromatic radicals include, but are not limited to, naphthyl and anthracenyl radicals. Suitable substituents on the substituted-aromatic hydrocarbon radicals, include, but are not necessarily limited to, hydrocarbyl radicals, organometalloid radicals, alkoxy and aryloxy radicals, alkylamido radicals, fluorocarbyl and fluorohydrocarbyl radicals such as those useful as X₃ and X₄. The substituent may be ortho, meta or para, relative to the carbon atoms bonded to the boron atom. When either or both X₃ and X₄ are a hydrocarbyl radical, each may be the same or a different aromatic or substituted-aromatic radical as are Ar₁ and Ar₂, or the same may be a straight or branched alkyl, alkenyl or alkynyl radical, a cyclic hydrocarbon radical or an alkyl-substituted cyclic hydrocarbon radical. X₃ and X₄ may also, independently be alkoxy or dialkylamido radicals wherein the alkyl portion of said alkoxy and dialkylamido radicals, hydrocarbyl radicals and organometalloid radicals. As indicated above, Ar₁ and Ar₂ could be linked to either X₃ or X₄. Finally, X₃ and X₄ may also be linked to each other through a suitable bridging group.

Illustrative, but non-limiting, examples of boron compounds which may be used as an activator component in the preparation of the improved catalysts of this invention are trialkyl-substituted ammonium salts such as triethylammonium tetra(phenyl)boron, tripropyl-ammonium tetra(phenyl)boron, tri(n-butyl)ammonium tetra(phenyl)boron, trimethylammonium tetra(p-tolyl)boron, trimethylammonium tetra(o-tolyl)boron, tributylammonium tetra(pentafluorophenyl)boron, tripropylammonium tetra(o,p-dimethylphenyl)boron, tributylammonium tetra(m,m-dimethylphenyl)boron, tributylammoniumtetra(p-tri-fluoromethylphenyl)boron, tri(n-butyl)ammonium tetra(o-tolyl)boron and the like; N,N-dialkyl anilinium salts such as N,N-dimethyl-anilinium tetra(pentafluorophenyl)boron, N,N-diethylanilinium tetra(phenyl)boron, and N,N-2,4,5-pentamethylanilinium tetra(phenyl)boron; dialkyl ammonium salts such as di(i-propyl)ammonium tetra(pentafluorophenyl)boron, dicyclohexylammonium tetra(phenyl)boron and the like; and triaryl phosphonium salts such as triphenylphosphonium tetra(phenyl)boron, tri(methylphenyl)phosphonium tetra(phenyl)boron and tri(dimethylphenyl)phosphonium tetra(phenyl)boron.

Similar lists of suitable compounds containing other metals and metalloids which are useful as activator components may be made, but such lists are not deemed necessary for complete disclosure. In this regard, it should be noted that the foregoing list is not intended to be exhaustive. Other useful boron compounds as well as useful compounds containing other metals or metalloids would be readily apparent to those skilled in the art from the foregoing general formulae.

### C. Group 13 Element Compound

Group 13 additive compounds suitable for use in catalyst systems used in the invention are represented by the following general formula: 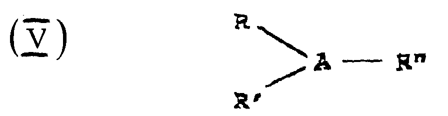 wherein:
A is a Group 13 element;
each R, R' and R'' is a straight or branched C₁₋₂₀ chain hydrocarbyl radical which may include alkyl radicals, a C₄₋₂₀ cyclic hydrocarbyl radical, an C₃₋₂₀ alkyl-substituted cyclohydrocarbyl radical, a substituted or unsubstituted C₂₋₂₀ aromatic radical or an alkyl-substituted radical. R'' may also be an C₁₋₂₀ alkoxide or aryloxide radical.

Illustrative, but non-limiting, examples of Group 13 element compounds which are suitable are: when A is aluminum (Al) the trialkyl or trihydrocarbyl aluminums such as trimethyl aluminum, triethyl aluminum, tri-n-propyl aluminum, tri-isopropyl, aluminum, tri-n-butyl aluminum, tri-sec-butyl aluminum, tri-t-butyl aluminum, tri-isobutyl aluminum, tri-n-pentyl aluminum, tri-isopentyl aluminum, tri-neopentyl aluminum, tricyclopentyl aluminum, tri-n-hexyl aluminum, tri-n-octyl aluminum, tri-(4-methylpentyl) aluminum, tri(isoprenyl)aluminum, tri-(3-methylpentyl) aluminum and tricyclohexyl aluminum; alkyl aluminums such as dimethylethyl aluminum, methyldiethyl aluminum, ethyldimethyl aluminum, dimethyl-n-propyl aluminum, methyldi-n-propyl aluminum, dimethylisopropyl aluminum, dimethylcyclohexyl aluminum, methylethylpropyl aluminum, and the like; aryl and alkyl-substituted aluminums, such as triphenyl aluminum, tri-p-tolyl aluminum, tri-m-tolyl aluminum and tri-p-ethyl aluminum. Also suitable are aluminum alkoxides and aryloxides such as dimethyl aluminum methoxide, dimethyl aluminum ethoxide, diethyl aluminum ethoxide, diethyl aluminum isopropoxide, methyl ethyl aluminum methoxide, dimethyl aluminum 4-methylphenoxide, dimethyl aluminum 3-methylphenoxide, dimethyl aluminum 2,6-diisopropylphenoxide and dimethyl aluminum 2,6-di-t-butyl-4-methylphenoxide.

A similar list of illustrative Group 13 element compounds when A is boron could be made for the trialkyl boranes, alkyl boranes, and alkyl borane alkoxides. Also a similar list could be given for the analogous compounds of gallium and indium, although the gallium and indium analogies are less preferred. Such list would be nearly identical to that already presented with respect to the aluminum species of Group 13 element compounds and therefore such listing of the borane analogies and other Group 13 elements are not deemed necessary to a complete disclosure.

### Choice of Mono (Cp) Transition Metal-Acticator Pairs

In general, and while most transition metals identified above may be combined with most activators identified above to produce an active olefin polymerization catalyst, it is important to continued polymerization operations that either a metal cation initially formed from the mono (Cp) transition metal or a decomposition product thereof be a relatively stable catalyst. It is also important that the anion of the activator be stable to hydrolysis when an ammonium salt is used. Further, it is important that the acidity of the activator is sufficient. relative to the transition metal to facilitate a reaction between a ligand of the metal (or first component) with the cation of the activator (or second component) species. Activator compounds containing aryl-ammonium salts such as N,N-dimethylanilinium are more acidic than trialkylammonium salts and therefore are more useful with a wider range of transition-metal compounds.

With respect to the combination of transition metals with activators to form the catalyst component of this invention, it should be noted that the two compounds combined for preparation of the active catalyst must be selected to avoid transfer of a fragment of the anion, particularly an aryl group, to the metal cation. Such a transfer could form a catalytically inactive species. This could be accomplished through steric hindrance, resulting from substitutions on the cyclopentadienyl carbon atoms as well as substitutions on the aromatic carbon atoms of the anion. It follows, then, that mono (Cp) transition metals comprising perhydrocarbyl-substituted cyclopentadienyl radicals could be effectively used with a broader range of activators than could components comprising unsubstituted cyclopentadienyl radicals. As the amount and size of the substitutions on the cyclopentadienyl radicals are reduced, however, more effective catalysts are obtained with activators containing anions which are more resistant to degradation, such as those with substituents on the ortho positions of the phenyl rings. Another means of rendering the anion more resistant to degradation is afforded by fluorine substitution, especially perfluoro substitution, in the anion. Fluoro-substituted stabilizing anions of the type [B(C₆F₅)₄]⁻ or [B(C₆F₅)₃X'']⁻ wherein X" is a monoanionic non-bridging hydride, hydrocarbyl, substituted-hydrocarbyl, halocarbyl, substituted-halocarbyl, hydrocarbyl- or halocarbyl-substituted organometalloid, substituted pnictogen or chalcogen, or halogen radical may, then, be used with a broader range of metallocenes.

### Polymerization Process

In an emodiment of the present invention, a Group 4 transition metal compound containing a substituted or unsubstituted mono(cyclopentadienyl) radical and a heteroatom radical made in accordance with WO 92/00333 one or two lower alkyl substituents and/or one or two hydride substituents will be combined with a trisubstituted ammonium salt of either a substituted or unsubstituted tetra(aromatic) boron. Each of the trisubstitutions in the ammonium cation will be the same or a different lower alkyl or aryl radical. Substituted anions are preferred as anions in the trisubstituted ammonium salts, particularly pentafluorosubstituted anions. N,N-dimethylanilinium tetra(fluorophenyl)boron is particularly preferred.

Any solvent or diluent previously described as suitable for preparing the ionic mono (Cp) transition metal catalyst component is also suitable as a polymerization diluent for preparing catalyst systems of the invention. Techniques or conditions for polymerization of monomers with the present catalyst system include high pressure, liquid, solution, bulk phase, slurry, and gas phase polymerization procedures.

While the ionic mono (Cp) catalyst systems do not contain pyrophoric species, it is nevertheless preferred that the catalyst components be handled in an inert, moisture-free, oxygen-free environment such as argon, nitrogen, or helium because of the sensitivity of the catalyst components to moisture and oxygen. The Group 13 element compounds must also be handled in a similar manner.

A preferred process for polymerizing monomers comprises:
(a) contacting ethylene, other alpha-olefins, cyclic olefins, ethylenically unsaturated non-cyclic non-conjugated poly-enes, cyclic non-conjugated poly-enes, acetylenically unsaturated monomers. or mixtures thereof with the catalyst system as described herein;
(b) maintaining the contacting step of (a) for a sufficient time, and under conditions sufficient to polymerize monomers; and
(c) recovering polymer product.

Alternatively, the transition metal and activator components are combined in a first step in an aromatic solvent to produce a solution of the ionic catalyst. This reaction may be carried out in the temperature range of -100°C to 300 °C, preferably 0°C to 100°C. Holding times to allow for the completion of the reaction may range from 10 seconds to 60 minutes depending upon variables such as reaction temperature and choice of reactants.

Once the ionic catalyst component is formed, the order or method of addition of the Group 13 element compound to the polymerization diluent with ionic catalyst is not critical. The catalyst system may be formed by: 1) first adding the Group 13 element compound to the polymerization diluent followed by addition of the ionic catalyst; 2) direct addition of the Group 13 element compound to a solution of ionic catalyst after which the common solution is added to a polymerization diluent; or 3) a portion of the Group 13 element compound may be added to a liquid monomer and supplied to the polymerization diluent containing ionic catalyst as the liquid monomer is supplied to the diluent. When a liquid monomer is used in the polymerization process, it is preferred to add the Group 13 element compound to the liquid monomer. The additive may be added neat or as a solution in a suitable hydrocarbon solvent, preferably an aliphatic or aromatic solvent.

Compared to an ionic mono (Cp) catalyst in a polymerization diluent from which a Group 13 element compound is absent, the use of too great an amount of Group 13 element compound in forming a catalyst system of the invention will suppress the productivity of the ionic mono (Cp) catalyst component. On the other hand, the use of too small an amount of Group 13 element compound will not produce an enhancement in productivity of the ionic mono (Cp) catalyst system. The optimum amount of Group 13 element compound for use in producing catalyst systems of the invention is dependent, in part upon the amount of Lewis base impurities contained in the polymerization diluent and/or monomers used in polymerization. In a typical polymerization process, it is expected that the optimum amount of Group 13 element compound to be added to obtain a catalyst system of maximum productivity will amount to a mole ratio of Group 13 element compound to activator compound of from 1:1 to 200:1, preferably 15:1 to 150:1. The preferred ratio of activator to transition metal component is from 1:1 to 20:1.

For a given polymerization process, the optimum amount of Group 13 element compound to be added to a polymerization diluent in which an ionic mono (Cp) catalyst component is present for forming a catalyst system of enhanced activity may readily be determined by monitoring the level of monomer consumption while adding the Group 13 element compound to the polymerization diluent until an amount of Group 13 element compound has been added which maximizes the rate at which the monitored monomer is consumed by the polymerization reaction. Alternatively, a portion of the Group 13 element compound is first added to the polymerization diluent after which the ionic mono (Cp) catalyst is added and polymerization is initiated and the rate of monomer consumption is monitored. Then, while polymerization is ongoing, an additional quantity of the Group 13 element compound is added and the consumption is observed. It should, however, be borne in mind that the objective of adding the additive is to neutralize impurities such as water or oxygen so that the level of additive addition should also be proportioned to the level of impurities present. Thus, it may be advantageous to pretreat a monomer having a relatively high level of such impurities with the additive before the monomer is brought into contact with the catalyst system.

The value of the Group 13 additive compound is selected to suit the catalyst, to gain optimum effect. Thus if the catalyst is one where the heteroatom (J) group or the bridging (T) group does not carry bulky substituents, then it is preferred to employ as Group 13 additive compound (a) a boron compound (which in general is less acidic and hence less interactive with the transition metal than aluminum compounds); or an aluminum compound which carries at least one substituent which is bulky. The bulky substituents serve to prevent, sterically, the additive metal eg. aluminum, from interacting with, and hence deactivating, the transition metal catalyst site. Preferably the Group 13 additive compound contains at least one C₄ - C₂₀ substituent, especially where the Group 13 element is aluminum and the catalyst transition metal is not "protected" by bulky substituents in the transition metal compound. Preferably, when the Group 13 compound contains a C4 substituent, it is branched.

As an example of a catalyst systems to avoid for optimum effect, when said Group 4 transition metal is Ti and said mono cyclopentadienyl ligand or polycyclic derivative is bridged to said Group 15 or 16 heteroatom with a dimethyl silyl radical and said Group 15 or 16 heteroatom further contains a tertiary-butyl substituent, said Group 13 organo compound excludes either of trimethyl or triethyl aluminum. The lower carbon number substituents of the aluminum organo compound and the heteroatom component are insufficiently bulky to effectively inhibit the interaction of the additive compound with the transition metal catalyst site.

In the case where the heteroatom (J) group on the transition metal of the catalyst compound is substituted with a 3° carbon atom, the bulkiness of the Group 13 compound substituents becomes less important. However with 1° and 2° substituents, the nature of the additive substituent size takes a greater importance for overall performance of the catalyst system. With specific reference to catalyst of formula (I) or (II), and Group 13 compounds of formula (V), it is preferred, especially when A is aluminum, that one or more of R, R', and R'' are C₄₋₂₀ groups, when S' contains a primary or secondary carbon atom bonded directly to J. Most preferably, in the case of one or more of R, R' and R" being a C₄ radical, said radical is branched. More expressly, mono Cp heteroatom containing transition metal compounds which comprise the catalyst component of the inventive catalyst system and which have bulky substituents on the hetero eg, amido groups, such as t-butyl, will polymerize monomers with enhanced productivity when employing any trialkyl aluminum or boron additive. However, mono Cp components with less bulky substituents are more effective with additives such as tri-isobutylaluminum (TiBAL), tri-n-octylaluminum (TNOA), tri-n-hexylaluminum (TNHA) than any with less bulky additives such as trimethylaluminum (TMA) or triethyl aluminum. Further, with the smaller molecular diameter titanium (and thus more reactive) as the transition metal, even with t-butyl as the substituent on J, a trialkyl aluminum additive compound will preferably have at least one substituent that is larger than an ethyl group (>C₂), most preferably at least t-butyl.

In general, the catalvst systems of this invention will polymerize olefins, diolefins and/or ethylenically or acetylenically unsaturated monomers either alone or in combination with other olefins and/or other unsaturated monomers at conditions well known in the prior art for conventional Ziegler-Natta catalysts.

Monomers which may be utilized in practice of the process include ethylene, other alpha-olefins, diolefins, cyclic olefins, ethylenically unsaturated non-cyclic non-conjugated polyenes, cyclic non-conjugated polymers, acetylenically unsaturated monomers, or combinations thereof, unsaturated hydrocarbons containing from 2 to 18 carbon atoms. Such monomers include cyclic and acyclic hydrocarbons, and straight or branched chain hydrocarbons. Illustrative, but non-limiting, of suitable monomers are: ethylene, propylene, butene-1, pentene-1, hexene-1, octene-1, decene-1, 2-methyl-propene-1, 3-methylbutene- 1,2-methylbutene-1,3-methylpentene-1,4-methylpentene-1, 1,3-butadiene, 1,4-pentadiene, 1,5-hexadiene, 1,4-hexadiene, cyclopentene, cyclohexene, cycloheptene, propyne, butadyne, and 1,4-dihexyne. Ethylene containing polymers in particular can be made with catalyst activities greater than 30 kg PE/mol activatior · hr · atmos.

In a most preferred embodiment of the present invention, a dimethyl Group 4 transition metal compound -- containing one tetramethylcyclopentadienyl radical and an alkyl amido radical, the two radicals covalently bonded and bridged through a silylalkylene group -- is reacted with N,N-dimethylanilinium tetra(pentafluorophenyl)boron to produce the most preferred ionic catalyst. The transition metal and activator components are combined at a temperature within the range from 0°C to 300°C, more preferably at from 25° to 100°C and at a pressure within the range from 15 to 500 psig (1.03 to 34.5 bar). In a most preferred embodiment of the present invention, the most preferred catalyst system is used either to homopolymerize ethylene or to copolymerize ethylene with a lower alpha-olefin having from 3 to 6 carbon atoms, thereby yielding a plastic or an elastomeric copolymer. In both preferred process embodiments, the monomers are maintained at polymerization conditions for a nominal holding time within the range from 1 to 60 minutes and the system is within the range from 10⁻⁶ to 10⁻⁵ moles of transition metal per liter of polymerization diluent, while a mole ratio of the Group 13 element compound to activator compound employed is maintained at from 15:1 to 150:1.

The use of the invention catalyst system which includes an appropriately selected additive for neutralizing impurities may result in an improvement of from 20 to 400% or more in ionic metallocene catalyst productivity over the ionic catalyst without the additive

In general, catalyst systems can be tailored so as to produce polymer products which will be substantially free of certain trace metals generally found in polymers produced with Ziegler-Natta type catalysts such as aluminum and magnesium and of chloride. Thus, for instance, the level of impurities may be monitored continuously and the rate of additive injection may be controlled to provide only that quantity of additive necessary to protect the catalyst sites from deactivation and not such an excess of additive so as to impair product quality or necessitate further processing to purify the polymer product. The polymer products produced with the catalyst system of the present invention or those as described in US 5,153,157 have a broader range of applications than polymers produced with either the more conventional Ziegler-Natta type catalysts comprising a metal alkyl, such as an aluminum alkyl, or the metallocene-alumoxane catalysts which typically require an excess of the alumoxane catalyst.

The following examples serve to illustrate the invention and some of its advantages and are not intended to limit the scope of the invention as disclosed above or claimed hereafter.

### EXAMPLES

### Example 1

Ethylene was polymerized in a hexane diluent by adding dry, oxygen-free hexane (400 ml) to a 1-liter stainless steel autoclave which had been previously flushed with nitrogen. Under nitrogen, a hexane solution (20 ml) containing 0.2 mmoles of triethylaluminum was transferred into the autoclave by means of a double-ended needle followed by a solution of methylphenylsilyl (t-butylamido)tetramethylcyclopentadienylhafnium dimethyl (20 mg) and N,N-dimethylanilinium tetrakis(pentafluorophenyl)boron (5 mg) in toluene (10 ml). The solution in the autoclave was heated to 40°C and stirred under 90 psi (6.2 bar) of ethylene. After two hours, the autoclave was vented and opened. The yield of polyethylene was 63.3 g.

### Example 2 (Comparative)

Ethylene was polymerized using the same catalyst components, solvents and equipment, and substantially the same concentrations, temperatures, and pressures as in Example 1 with the exception that no triethylaluminum was used. Polymenzation was discontinued after 35 minutes, when it was apparent that substantially no polymerization reaction was taking place. This was in contrast to Example 1 wherein polymerization commenced almost at once. The yield of polyethylene was 0 7 g.

### Example 3

An ionic catalyst was prepared by dissolving 50 ml of dimethylsilyl (cyclododecylamido)tetramethylcyclopentadienyltitanium dimethyl and 25 mg N,N-dimethylanilinium tetrakis(pentafluorophenyl)boron in 10 ml toluene. Dry, oxygen-free hexane (400 ml) was added to a 1 liter stainless steel autoclave which had been previously flushed with nitrogen. Under nitrogen, a hexane solution (2 ml) containing 0.25% triisoprenylaluminum was transferred into the autoclave by means of a double-ended needle, followed by 4 ml of the catalyst solution. The ratio of titanium containing catalyst to boron containing activator was 3.7. The solution in the autoclave was heated to 80°C and 4.42 atmospheres (4.46 bar) of ethylene (.228 moles) were introduced. Polymerization was carried out for 0.1 hours, after which time the autoclave was vented and opened. The yield of polyethylene was 2.1 grams. This corresponds to productivity of 61 kg polymer/mole activator atmosphere hour, or 269 kg polymer/mole activator hour.

### Example 4

Example 3 was repeated, except that 23 ml of activator were used (thus catalyst: activator mole ratio is 4.0), and the polymerization was carried out for 0.12 hours. The yield of polyethylene was 2.5 grams, which corresponds to 67 kg polymer/mole activator atmosphere hours, or 298 kg polymer/mole activator hour.

### Example 5

Example 4 was repeated, except that no scavenging additive (triisoprenylaluminum) was introduced into the reactor, and the polymerization reaction was carried out for 0.4 hours. The yield of polyethylene was 7.2 grams, corresponding to 57 kg polymer/mole activator atmosphere hours or 251 kg polymer/mole activator hours.

### Example 6

N,N-dimethylanilinium tetrakis (pentafluorophenyl) boron (31mg) and dimethylsily (tetramethylcyclopentadienyl) (cyclododecylamido) titanium dimethyl (50 mg) were reacted in toluene (10 ml). A portion of this solution (2 ml) was added to a 1 L stainless-steel autoclave which was previously flushed with nitrogen and which contained dry, deoxygenated hexane (400 ml) and triethylaluminum (2 ml of 5% solution in heptane). The autoclave was heated to 40°C and ethylene (4.55 bar) added. After 10 minutes, the autoclave was cooled and vented and the polymer product collected. The yield of polyethylene was 4.9 g (catalyst activity of 34 kg PE/mol activator · hr · atom).

Examples 1 and 2 demonstrate the major effect that addition of a scavenging additive in a catalyst system according to the invention has, on the productivity of the catalyst system. Similarly, examples 3-5 demonstrate that the use of the scavenging additive leads to an improvement in productivity of the catalyst system. Selection of the scavenging additive in association with the nature of the catalyst and the activator, will enable productivities to be adjusted, depending on the amounts of impurities which are otherwise in the system.

Example 6 illustrates the effective use of a lower carbon number alklaluminum as scavenging additive for a mono-(Cp) titanium catalyst system where at least one substituent, here on the heteroatom, is more bulky than a C₄-alkyl substituent.

## Claims

1. A polymerization process for polymerizing unsaturated monomers to form a polymer but excluding styrenic polymer and stereoregular polyolefin which uses a non-supported catalyst system comprising:
(a) a cation comprising:
(1) a Group 4 transition metal,
(2) a mono cyclopentadienyl ligand or polycyclic derivative thereof bonded to the Group 4 transition metal atom,
(3) one Group 15 or 16 heteroatom ligand bonded to the metal through the hereto atom, and
(4) at least one other ligand;
(b) a non-coordinating anion of a Bronsted acid salt;
(c) a Group 13 element organo compound excluding alumoxane:
wherein, when said Group 4 transition metal is Ti and said mono cyclopentadienyl ligand or polycyclic derivative is bridged to said Group 15 or 16 heteroatom with a dimethyl silyl radical and said Group 15 or 16 hetero atom further contains a tertiary-butyl substituent, said Group 13 organo compound excludes either of trimethyl or triethyl aluminum.

2. A process according to claim 1 wherein the catalyst system comprises:
(a) a reaction product of
(i) at least one transition metal compound represented by either: 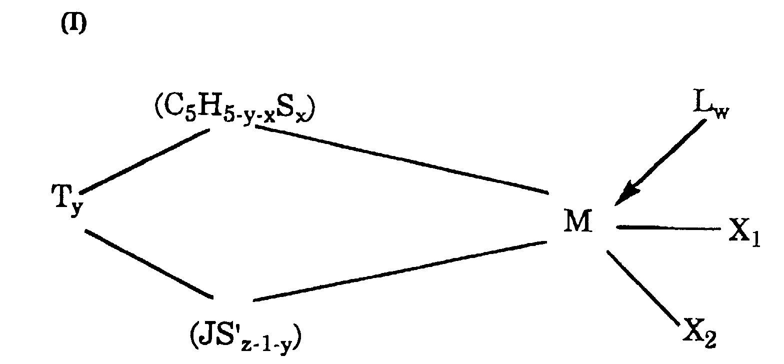 or 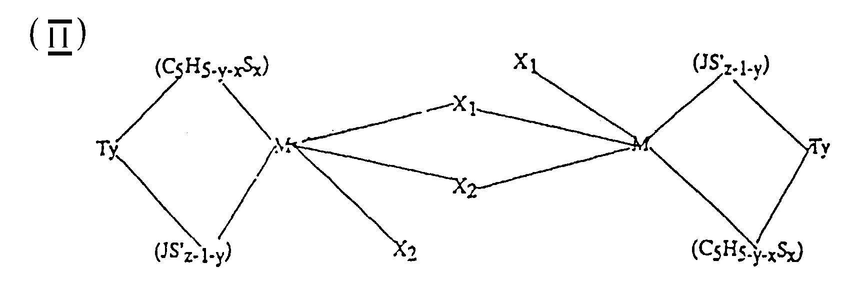 where:
M is the same or different Group 4 transition metal;
(C₅H_{5-y-x}Sₓ) is a cyclopentadienyl ring, or derivative thereof with from 0 to 5 substituents S;
x is an integer from 1 to 5 dependent upon the degree of substitution;
each S substituent is, independently a radical group selected from hydrocarbyl, substituted hydrocarbyl, halocarbyl, substituted halocarbyl, hydrocarbyl-substituted organometalloid, halocarbyl-substituted organometalloid radical, disubstituted boron, disubstituted pnictogen, substituted chalcogen, halogen, or combinations thereof; any two adjacent S groups may be joined forming a ring of from 4 to 20 carbon atoms yielding a saturated or unsaturated polycyclic cyclopentadienyl ring ligand;
each (JS'_{z-1-y}) is a heteroatom ligand in which J is an element from Group 15 of the Periodic Table of Elements with a coordination number of 3 or an element from Group 16 with a coordination number of 2; each S' is a radical group selected from hydrocarbyl, substituted hydrocarbyl, hydrocarbyl-substituted organometalloid, or halocarbyl-substituted organometalloid radical, any of which may be cyclic or non-cyclic; and z is the coordination number of the element J;
each X₁ or X₂, is a hydride radical, hydrocarbyl radical, substituted-hydrocarbyl radical, or hydrocarbyl-substituted organometalloid radical, or both X₁ and X₂ are joined and bound to the metal atom to form a metallacycle ring containing from about 3 to about 20 carbon atoms;
y is 0 or 1; when y is 1, T is a covalent bridging group containing a Group 14 or 15 element;
L is a neutral Lewis base and w is an integer from 0 to 3;
(ii) at least one activator represented by:
(III) [(L'-H)⁺]_{d}[(M')^{m+}Q₁Q₂...Qₙ]^{d-}
or
(IV) [L'-H]⁺[BAr₁Ar₂X₃X₄]⁻,
wherein:
[L'-H] is a Bronsted acid;
M' is a metal or metalloid;
each Q is, independently, a hydride radical, hydrocarbyl radical, substituted-hydrocarbyl radical, halocarbyl radical, substituted-halocarbyl radical, hydrocarbyl-substituted organometalloid radical, halocarbyl-substituted organometalloid radical, disubstituted pnictogen radical, substituted chalcogen radical, and halogen radical, any one, but not more than one of Q₁ to Qₙ a halogen radical; m is an integer representing the formal valence of M';
n is the total number of ligands Q
B is boron in a valence state of +3;
Ar₁ and Ar₂ are the same or different aromatic hydrocarbyl radicals which may be linked through a stable bridging group;
X₃ and X₄ are, independently, hydride radicals, hydrocarbyl and substituted-hydrocarbyl radicals, halocarbyl- and substituted- halocarbyl radicals, hydrocarbyl- and halocarbyl substituted organometalloid radicals, disubstituted pnictogen radicals, substituted chalcogen radicals and halogen radicals, at least one of X₃ or X₄ not being a halogen; and
(b) at least one organometallic additive compound represented by the formula: 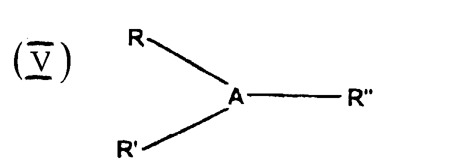 wherein:
A is a Group 13 element,
each R, R', and R" is a straight or branched C₁₋₂₀ hydrocarbyl radical, C₄₋₂₀ cyclic hydrocarbyl radical, C₃₋₂₀ alkyl-substituted cyclohydrocarbyl radical, substituted or unsubstitutued C₂₋₂₀ aromatic radical, or alkyl-substituted aromatic radical; and
R" may also be a C₁₋₂₀ alkoxide or aryloxide radical.

3. A process according to claim 2 wherein S' is a group bonded to J through a primary or secondary carbon atom and at least one of R, R', R" is a radical having from 4 to 20 carbon atoms.

4. A process according to claim 2 wherein the A of the organometallic additive compound is aluminum or boron.

5. A process according to claim 1 or claim 2 wherein the non-coordinating anion is derived from an ammonium salt of [B(C₆F₅)₄]⁻ or [B(C₆F₅)₃X'']⁻, where X'' is a monoanionic non-bridging hydride, hydrocarbyl, substituted-hydrocarbyl, halocarbyl, substituted-halocarbyl, hydrocarbyl- or halocarbyl-substituted organometalloid, substituted pnictogen, chalcogen, or halogen radical.

6. A process according to claim 1 comprising:
(a) contacting ethylene, other alpha-olefins, cyclic olefins, ethylenically unsaturated non-cyclic non-conjugated poly-enes, cyclic non-conjugated poly-enes, acetylenically unsaturated monomers, or mixtures thereof, with the catalyst system;
(b) maintaining contacting step (a) for a sufficient time, and under conditions sufficient to polymerize monomers; and
(c) recovering polymer product.

7. A process according to claim 6 wherein monomer comprise, ethylene, propylene, 4-methyl-1-pentene, hexene, octene, norbornene, or combinations thereof.

8. A process according to claim 7 wherein the catalyst system comprises an activator to transition metal compound ratio of from 1:1 to 20:1.

9. A process according to claim 8 wherein the ratio of organometallic additive to activator is from 1:1 to 200:1.

10. A process according to claim 9 wherein the contacting step (a) is conducted under conditions of high pressure, solution phase, liquid phase, bulk phase, slurry phase, or gas phase polymerization conditions.

## Patentansprüche

1. Polymerisationsverfahren zum Polymerisieren von ungesättigten Monomeren zur Bildung eines Polymers, jedoch unter Ausschluß von Styrolpolymer und stereoregulärem Polyolefin, das ein trägerloses Katalysatorsystem verwendet, das
(a) Kation, das
(1) Gruppe 4 Übergangsmetall,
(2) Monocyclopentadienylliganden oder polycyclisches Derivat desselben, der bzw. das an das Gruppe 4 Übergangsmetallatom gebunden ist,
(3) einen Gruppe 15 oder 16 Heteroatomliganden, der über das Heteroatom an das Metall gebunden ist, und
(4) mindestens einen weiteren Liganden umfaßt,
(b) nicht-koordinierendes Anion eines Brönstedtsäuresalzes,
(c) Organoverbindung eines Gruppe 13 Elements unter Ausschluß von Alumoxan
umfaßt, wobei, wenn das Gruppe 4 Übergangsmetall Ti ist und der Monocyclopentadienylligand oder das polycyclische Derivat über einen Dimethylsilylrest mit dem Gruppe 15 oder 16 Heteroatom verbrückt ist und das Gruppe 15 oder 16 Heteroatom ferner einen tert.-Butylsubstituenten enthält, die Organoverbindung der Gruppe 13 Trimethyl- oder Triethylaluminium ausschließt.

2. Verfahren nach Anspruch 1, bei dem das Katalysatorsystem
(a) ein Reaktionsprodukt von
(i) mindestens einer Übergangsmetallverbindung, die durch 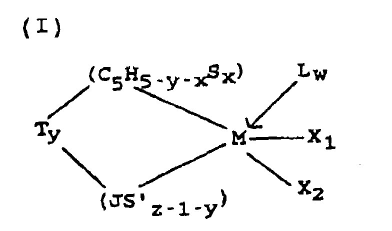 oder 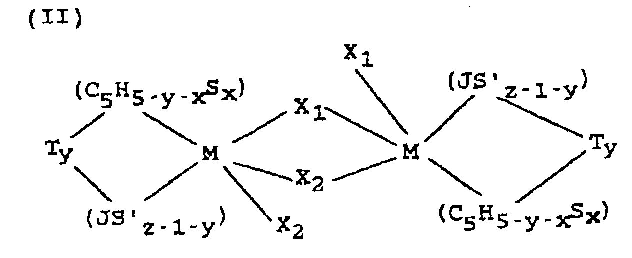 wiedergegeben wird, wobei
M das gleiche oder ein anderes Gruppe 4 Übergangsmetall ist,
(C₅H_{5-y-x}Sₓ) ein cyclopentadienylring oder Derivat desselben mit 0 bis 5 Substituenten S ist,
x eine ganze Zahl von 1 bis 5 in Abhängigkeit von dem Substitutionsgrad ist,
jeder Substituent S unabhängig eine Restgruppe ausgewählt aus Kohlenwasserstoff, substituiertem Kohlenwasserstoff, Halogenkohlenwasserstoff, substituiertem Halogenkohlenwasserstoff, kohlenwasserstoffsubstituiertem Organometalloid, halogenkohlenwasserstoffsubstituiertem Organometalloidrest, disubstituiertem Bor, disubstituiertem Pnictogen, substituiertem Chalcogen, Halogen oder Kombinationen derselben ist, wobei zwei beliebige benachbarte S-Gruppen unter Bildung eines Rings mit 4 bis 20 Kohlenatoffatomen verbunden sein können, was einen gesättigten oder ungesättigten polycyclischen cyclopentadienylringliganden ergibt,
jedes (JS'_{z-1-y}) ein Heteroatomligand ist, in dem J ein Element der Gruppe 15 des Periodensystems der Elemente mit einer Koordinationszahl von 3 oder ein Element der Gruppe 16 des Periodensystems der Elemente mit einer Koordinationszahl von 2 ist, jedes S' eine Restgruppe ausgewählt aus Kohlenwasserstoff-, substituiertem Kohlenwasserstoff-, kohlenwasserstoffsubstituiertem Organometalloid- oder halogenkohlenwasserstoffsubstituiertem Organometalloidrest iet, wobei jeder von diesen cyclisch oder nicht-cyclisch sein kann,
und z die Koordinationazahl des Elements j ist,
jedes X₁ oder X₂ ein Hydridrest, Kohlenwasserstoffrest, substituierter Kohlenwasserstoffrest oder kohlenwasserstoffsubstituierter Organometalloidrest ist oder beide X₁ und X₂ miteinander verbunden und an das Metallatom gebunden sind, um einen metallacyclischen Ring mit etwa 3 bis etwa 20 Kohlenstoffatomen zu bilden,
y 0 oder 1 ist; wenn y 1 ist, T eine kovalente Brückengruppe ist, die ein Gruppe 14 oder 15 Element enthält,
L eine neutrale Lewisbase ist und w eine ganze Zahl von 0 bis 3 ist,
(ii) mindestens einer Aktivatorverbindung, die durch
(III) [(L'-H)⁺]_{d}[(M')^{m+}Q₁Q₂...Qₙ]^{d-}
oder
(IV) [L'-H]⁺[BAr₁Ar₂X₃X₄]⁻
wiedergegeben wird, wobei
[L'-H] eine Brönstedtsäure ist,
M' ein Metall oder Metalloid ist,
jedes Q unabhängig ein Hydridrest, Kohlenwasserstoffrest, substituierter Kohlenwasserstoffrest, Halogenkohlenwasserstoffrest, substituierter Halogenkohlenwasserstoffrest, kohlenwasserstoffsubstituierter Organometalloidrest, halogenkohlenwasserstoffsubstituierter Organometalloidrest, disubstituierter Pnictogenrest, substituierter Chalcogenrest und Halogenrest ist, wobei ein beliebiger, aber nicht mehr als einer von Q₁ bis Qₙ ein Halogenrest ist, m eine ganze Zahl ist, die die Formalladung von M' wiedergibt
n die Gesamtanzahl der Liganden Q ist,
B Bor im Wertigkeitszustand +3 ist,
Ar₁ und Ar₂ die gleichen oder unterschiedliche aromatische Kohlenwasserstoffreste sind, die über eine stabile Brückengruppe miteinander verbunden sein können,
X₃ und X₄ unabhängig Hydridreste, Kohlenwasserstoff- und substituierte Kohlenwasserstoffreste, Halogenkohlenwasserstoff- und substituierte Halogenkohlenwasserstoffreste, kohlenwasserstoff- und halogenkohlenwasserstoffsubstituierte Organometalloidreste, disubstituierte Pnictogenreste, substituierte Chalcogenreste und Halogenreste sind, wobei mindestens einer von X₃ oder X₄ kein Halogen ist, und
(b) mindestens eine organometallische Additivverbindung umfaßt, die durch die Formel 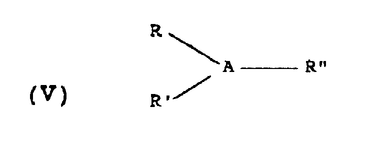 wiedergegeben wird, in der
A ein Gruppe 13 Element ist,
jeder R, R' und R" ein geradkettiger oder verzweigter C₁- bis C₂₀-Kohlenwasserstoffrest, cyclischer C₄- bis C₂₀-Kohlenwasserstoffrest, C₃- bis C₂₀-alkylsubstituierter Cyclokohlenwasserstoffrest, substituierter oder unsubstituierter C₂- bis C₂₀-aromatischer Rest oder alkylsubstituierter aromatischer Rest ist, und
R" auch ein C₁- bis C₂₀-Alkoxid- oder Aryloxidrest sein kann.

3. Verfahren nach Anspruch 2, bei dem S' eine Gruppe ist, die über ein primäres oder sekundäres Kohlenstoffatom an J gebunden ist, und wobei mindestens einer von R, R', R" ein Rest mit 4 bis 20 Kohlenstoffatomen ist.

4. Verfahren nach Anspruch 2, bei dem das A der organometallischen Additivverbindung Aluminium oder Bor ist.

5. Verfahren nach Anspruch 1 oder Anspruch 2, bei dem das nicht-koordinierende Anion das Ammoniumsalz von [B(C₆F₅)₄⁻ oder [B(C₆F₅)₃X"]⁻ ist, wobei X" ein monoanioniacher, nicht-verbrückender Hydrid-, Kohlenwasserstoff-, substituierter Kohlenwasserstoff-, Halogenkohlenwasserstoff-, substituierter Halogenkohlenwasserstoff, kohlenwasserstoff- oder halogenkohlenwasserstoffsubstituierter Organometalloid-, substituierter Pnictogen-, Chalcogen- oder Halogenrest ist.

6. Verfahren nach Anspruch 1, bei dem
(a) Ethylen, andere α-Olefine, cyclische Olefine, ethylenisch ungesättigte, nicht-cyclische, nicht-konjugierte Polyene, cyclische, nicht-konjugierte Polyene, acetylenisch ungesättigte Monomere oder Mischungen derselben mit dem Katalysatorsystem kontaktiert werden,
(b) Kontaktstufe (a) über einen ausreichenden Zeitraum und unter ausreichenden Bedingungen aufrechterhalten wird, um Monomere zu polymerisieren, und
(c) Polymerprodukt gewonnen wird.

7. Verfahren nach Anspruch 6, bei dem das Monomer Ethylen, propylen, 4-Methyl-1-penten, Hexen, Octen, Norbornen oder Kombinationen derselben umfaßt.

8. Verfahren nach Anspruch 7, bei dem das Katalysatorsystem ein Verhältnis von Aktivator zu Übergangsmetallverbindung von 1:1 bis 20:1 umfaßt.

9. Verfahren nach Anspruch 8, bei dem das Verhältnis von organometallischem Additiv zu Aktivator 1:1 bis 200:1 beträgt.

10. Verfahren nach Anspruch 9, bei dem die Kontaktstufe (a) unter Bedingungen von hohem Druck, Lösungsphasen-, Flüssigphasen-, Massenphasen-, Aufschlämmungsphasen- oder Gasphasenpolymerisationsbedingungen durchgeführt wird.

## Revendications

1. Procédé de polymérisation pour la polymérisation de monomères insaturés afin de former un polymère, mais à l'exclusion d'un polymère styrénique et d'une polyoléfine stéréorégulière, qui utilise une formulation de catalyseur non fixée sur un support, comprenant :
(a) un cation comprenant :
(1) un métal de transition du Groupe 4,
(2) un ligand monocyclopentadiényle ou un de ses dérivés polycycliques, lié à l'atome de métal de transition du Groupe 4,
(3) un ligand hétéroatomique du groupe 15 ou 16 lié au métal par l'hétéroatome, et
(4) au moins un autre ligand,
(b) un anion non coordinant d'un sel d'acide de Brönsted ;
(c) un composé organique d'un élément du Groupe 13, à l'exclusion d'un aluminoxane ;
dans lequel, lorsque ledit métal de transition du Groupe 4 consiste en Ti et ledit ligand monopentadiényle ou dérivé polycyclique est ponté audit hétéroatome du Groupe 15 ou 16 avec un radical diméthylsilyle et ledit hétéroatome du Groupe 15 ou 16 contient en outre un substituant tertiobutyle, ledit composé organique d'un élément du Groupe 13 est un composé à l'exclusion du triméthyl- ou triéthyl-aluminium.

2. Procédé suivant la revendication 1, dans lequel la formulation de catalyseur comprend :
(a) un produit de réaction
(i) d'au moins un composé de métal de transition représenté par la formule : 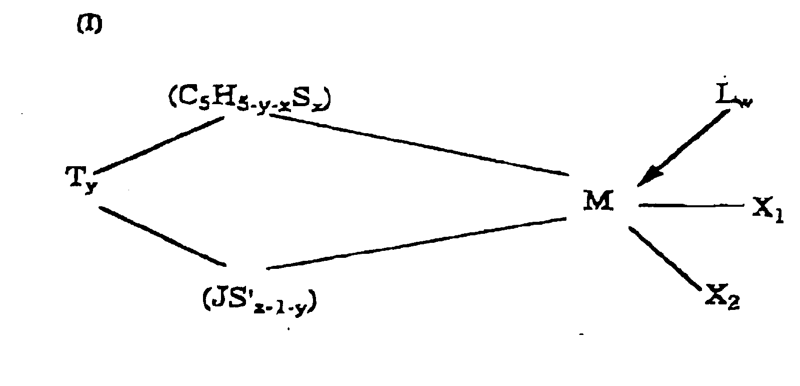 ou 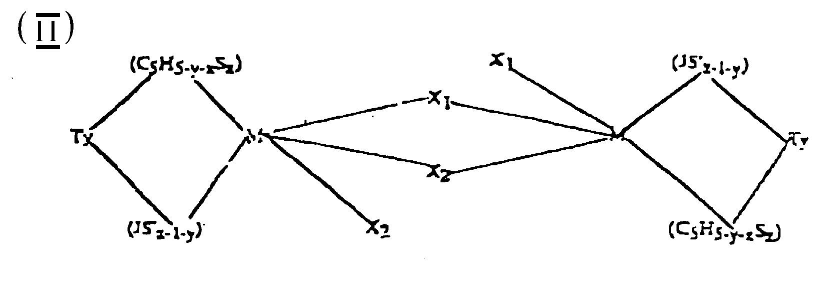 dans laquelle :
M représente des métaux de transition du Groupe 4, identiques ou différents ;
(C₅H_{5-y-x}Sₓ) représente un noyau cyclopentadiényle, ou un de ses dérivés avec 0 à 5 substituants S ;
x représente un nombre entier de 1 à 5 en fonction du degré de substitution ;
chaque substituant S représente, indépendamment, un groupe choisi entre des radicaux hydrocarbyle, hydrocarbyle substitué, organométalloïdiques à substituant hydrocarbyle, organométalloïdiques à substituant halogénocarbyle, bore disubstitué, pnictogène disubstitué, chalcogène substitué, halogène ou une de leurs associations ; deux groupes S adjacents quelconques pouvant être joints en formant un noyau de 4 à 20 atomes de carbone donnant un ligand à noyau cyclopentadiényle polycyclique saturé ou insaturé ;
chaque groupe (JS'_{z-1-y}) représente un ligand hétéroatomique dans lequel J représente un élément du Groupe 15 du Tableau Périodique des Eléments ayant un indice de coordination égal à 3 ou un élément du Groupe 16 ayant un indice de coordination égal à 2 ; chaque groupe S' représente un radical choisi entre des radicaux hydrocarbyle, hydrocarbyle substitué, organométalloïdiques à substituant hydrocarbyle et organométalloïdiques à substituant halogénocarbyle, n'importe lequel de ces radicaux pouvant être cyclique ou non cyclique ; et z représente l'indice de coordination de l'élément J ;
chacun des groupes X₁ et X₂ représente un radical hydrure, un radical hydrocarbyle, un radical hydrocarbyle substitué ou un radical organométalloïdique à substituant hydrocarbyle, ou bien X₁ et X₂ sont joints l'un à l'autre et liés à l'atome métallique pour former un noyau métallacyclique contenant environ 3 à environ 20 atomes de carbone ;
y est égal à 0 ou 1 ; lorsque y est égal à 1, T représente un groupe de pontage covalent contenant un élément du Groupe 14 ou 15 ;
L représente une base neutre de Lewis et w représente un nombre entier de 0 à 3 ;
(i) d'au moins un activateur représenté par la formule :
(III) [(L'-H)+]^{d} [(M')^{m+}Q'₁ Q'_{2...}Q'ₙ]^{d-}
ou
(IV) [L'-H] + [BAr₁Ar₂X₃X₄]⁻
dans laquelle :
[L'-H] représente un acide de Brönsted ;
M' représente un métal ou métalloïde ;
chaque groupe Q' représente un radical hydrure, un radical hydrocarbyle substitué, un radical halogénocarbyle, un radical halogénocarbyle substitué, un radical organométalloïdique à substituant hydrocarbyle, un radical pnictogène disubstitué, un radical chalcogène substitué ou un radical halogéno, l'un quelconque, mais pas plus d'un, des radicaux Q₁ à Qₙ représentant un radical halogéno ; m représente un nombre entier correspondant à la valence formelle de M' ;
n représente le nombre total de ligands Q' ;
B représente le bore à l'état de valence +3 ;
Ar₁ et Ar₂ représentent des radicaux hydrocarbyle aromatiques identiques ou différents qui peuvent être liés par un groupe de pontage stable ;
X₃ et X₄ représentent des radicaux hydrure, des radicaux hydrocarbyle et hydrocarbyle substitués, des radicaux organométalloïdiques à substituants hydrocarbyle et halogénocarbyle, des radicaux pnictogène disubstitués, des radicaux chalcogène substitués et des radicaux halogéno, au moins un des radicaux X₃ et X₄ ne consistant pas en un halogéne ; et
(b) au moins un additif organométallique représenté par la formule : 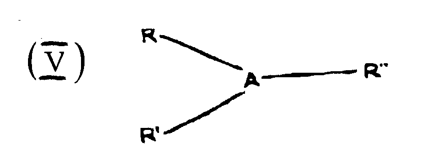 dans laquelle :
A représente un élément du Groupe 13,
chacun des R, R' et R'' représente un radical hydrocarbyle en C₁ à C₂₀ droit ou ramifié, un radical hydrocarbyle cyclique en C₄ à C₂₀, un radical cyclohydrocarbyle à substituant alkyle en C₃ à C₂₀, un radical aromatique en C₂ à C₂₀ substitué ou non substitué ou un radical aromatique à substituant alkyle ; et
R" peut représenter également un radical alcoolate ou aryloxyde en C₁ à C₂₀.

3. Procédé suivant la revendication 2, dans lequel S' représente un groupe lié à J par un atome de carbone primaire ou secondaire et au moins un des radicaux R, R', R" représente un radical ayant 4 à 20 atomes de carbone.

4. Procédé suivant la revendication 2, dans lequel l'élément A de l'additif organométallique consiste en aluminium ou bore.

5. Procédé suivant la revendication 1 ou la revendication 2, dans lequel l'anion non coordinant du sel d'ammonium est un anion de formule [B(C₆F₅)₄]⁻ ou [B(C₆F₅)₃X"]⁻, dans laquelle X" représente un radical monoanionique sans effet de pontage hydrure, hydrocarbyle, hydrocarbyle substitué, halogénocarbyle, halogénocarbyle substitué, organométalloïdique à substituant hydrocarbyle ou halogénocarbyle, pnictogène substitué, chalcogène ou halogéno.

6. Procédé suivant la revendication 1, comprenant les étapes consistant :
(a) à mettre en contact de l'éthylène, d'autres alpha-oléfines, des oléfines cycliques, des polyènes non conjugués non cycliques à insaturation éthylénique, des polyènes non conjugués cycliques, des monomères à insaturation acétylénique ou leurs mélanges ;
(b) à maintenir l'étape de contact (a) pendant un temps suffisant et dans des conditions suffisantes pour provoquer la polymérisation des monoméres ; et
(c) à recueillir le produit polymérique.

7. Procédé suivant la revendication 6, dans lequel le monomère comprend l'éthylène, le propylène, le 4-méthyl-1-pentène, l'hexène, l'octène, le norbornène ou leurs associations.

8. Procédé suivant la revendication 7, dans lequel la formulation de catalyseur comprend un rapport de l'activateur au composé de métal de transition compris dans l'intervalle de 1:1 à 20:1.

9. Procédé suivant la revendication 8, dans lequel le rapport de l'additif organométallique à l'activateur est compris dans l'intervalle de 1:1 à 200:1.

10. Procédé suivant la revendication 9, dans lequel l'étape de contact (a) est mise en oeuvre dans des conditions de polymérisation sous haute pression, en solution, en phase liquide, en masse, en suspension ou en phase gazeuse.
